# EUROPEAN PATENT APPLICATION

(11) **EP 1 263 201 A2**
(43) Date of publication of application: **04.12.2002**
(21) Application number: 02008874.6
(22) Date of filing: 20.04.2002
(51) Int. Cl.: H04M 3/432, H04M 3/42

(54) **Facilitating mediated response to a communication request transmitted for recepion by a wireless telephone**

(30) Priority: 29.05.2001 US 867272
(71) Applicant: Alcatel S.A., 75008 Paris (FR)
(72) Inventor: Hoersten, Craig A., Plano, Texas (US)
(74) Representative: Dreiss, Fuhlendorf, Steimle & Becker

(57) **Abstract**

An embodiment of a method capable of facilitating a mediated response to a communication request is disclosed herein. The method includes receiving a communication request that is received from a calling party communication device and intended for reception by a wireless telephone. After receiving the communication request, initiation of an active voice communication session between the wireless telephone and the calling party communication device is delayed. Also after receiving the communication request, an announcement is transmitted for being received by the calling party communication device. The announcement includes information for conveying that initiation of the active voice communication session has been delayed.

## Description

### FIELD OF THE DISCLOSURE

The disclosures herein relate generally to wireless telephones and more particularly to facilitated mediated response to a communication request transmitted for reception by a wireless telephone.

### BACKGROUND

Wireless telephones have become a mainstream wireless communications device. Through the use of a wireless telephone, a person is accessible for participating in telephone calls as they engage in their daily activities. As a result, people are now more accessible than ever to engage in telephone calls as they go about their daily activities.

As a result of being more accessible, people are also now more unavailable for participating personally in telephone calls. In many instances, even though a person is accessible via a wireless telephone, some situations often make it inconvenient or inappropriate for the person to answer a call at a particular location or during a particular situation. For example, while in a meeting, a person may be accessible via their wireless telephone. However, during the meeting and for any number of reasons, it may be inappropriate or inconvenient for the person to answer the call, if even just to ask the calling party to hold on a moment so that the person can move to a different location. This is often the case even though it is an incoming telephone call that the person needs to or would like to answer.

Call return, voice mail, and call forwarding are examples of conventional solutions for addressing calls that cannot be answered personally. These types of conventional solutions are limited in their ability for allowing a person to take a call in a situation or location where the call cannot be answered personally. Even though the person is able to move to a different location or wait a moment for an inappropriate situation to change so that they may take the call, associated time constraints may result in the caller hanging up or the call being rolled over to voice mail.

Therefore, for a call recipient using a wireless telephone, facilitating a mediated response to a communication request in a manner that allows for the call recipient to move to a different location or to wait for a present situation to change is useful.

### BRIEF DESCRIPTION OF THE DRAWINGS

FIG. 1 is a flow chart view depicting a general embodiment of a method for facilitating delayed initiation of an active voice communication session.

FIG. 2 is a flow chart view depicting a detailed system-based embodiment of a method for facilitating, via an automated implementation, delayed initiation of an active voice communication session.

FIG. 3 is a flow chart view depicting a detailed device-based embodiment of a method for facilitating, via an automated implementation, delayed initiation of an active voice communication session.

FIG. 4 is a flow chart view depicting a detailed device-based embodiment of a method for facilitating, via a manual implementation, delayed initiation of an active voice communication session.

FIG. 5 is a flow chart view depicting an embodiment of an embodiment of an apparatus suitably configured for carrying out embodiments of methods for facilitating delayed initiation of an active voice communication session.

### DETAILED DESCRIPTION OF THE FIGURES

An embodiment of a method capable of facilitating a mediated response to a communication request is disclosed herein. The method includes receiving a communication request that is received from a calling party communication device and intended for reception by a wireless telephone. After receiving the communication request, initiation of an active voice communication session between the wireless telephone and the calling party communication device is delayed. Also after receiving the communication request, an announcement is transmitted for being received by the calling party communication device. The announcement includes information for conveying that initiation of the active voice communication session has been delayed.

A person having a wireless telephone is often times in a situation or location that is not appropriate or convenient for engaging in an active voice communication session. Examples of a situation or location that are not appropriate or convenient for engaging in an active voice communication session include being in a meetings, being on an elevator with another person, being in a conversation with another person, etc. An active voice communication session is defined herein to include non-mediated 2-way communication between a wireless telephone and a calling party communication device.

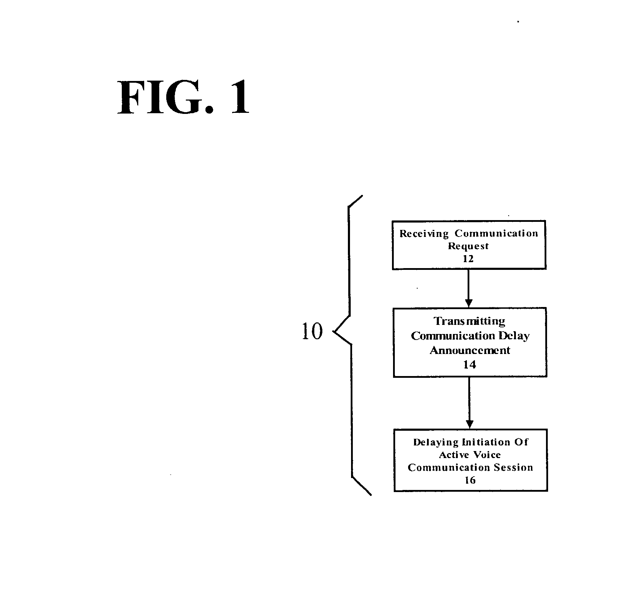

A general embodiment of a method 10 for facilitating delayed initiation of an active voice communication session is depicted in FIG. 1. The method 10 enables a call recipient to move to a different location or to wait for a present situation to change prior to initiating the active voice communication session. The method 10 is advantageous over conventional solutions in that it provides a simple yet effective and non-disruptive means for allowing an incoming telephone call to be taken as opposed to being forwarded to another number or to a voice mail account.

The method 10 includes an operation 12 for receiving a communication request transmitted for reception by a wireless telephone from a calling party communication device. After receiving the communication request, an operation 14 is performed for transmitting a communication delay announcement for being received by the calling party communication device. Also after receiving the communication request, an operation 16 is performed for delaying initiation of an active voice communication session between the wireless telephone and the calling party communication device. In at least one embodiment of the communication delay announcement, the communication delay announcement includes information for conveying that initiation of the active voice communication session has been delayed.

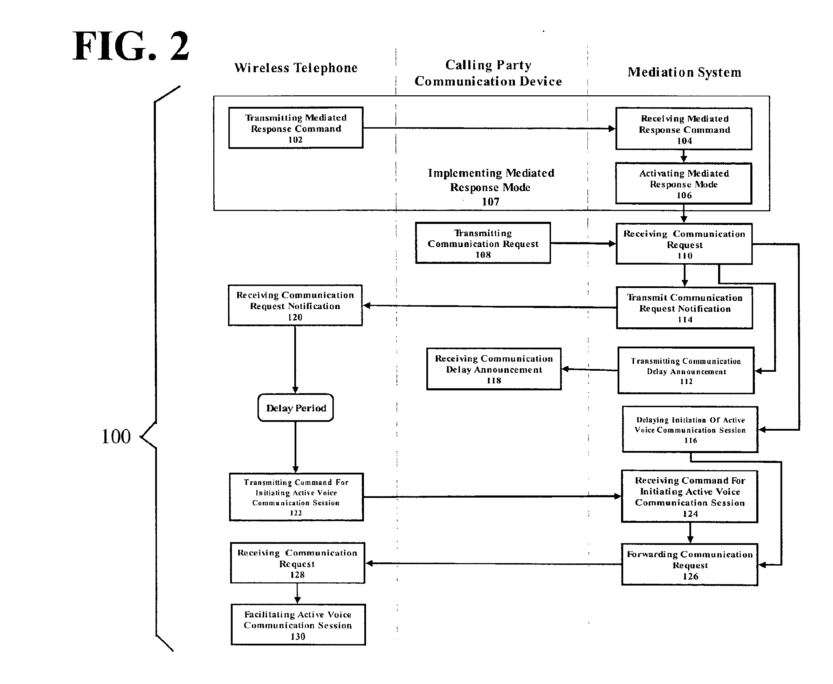

FIG. 2 depicts a detailed system-based embodiment of a method 100 for facilitating, via an automated implementation, delayed initiation of an active voice communication session. The method 100 includes an operation 102 for transmitting a mediated response command from a wireless telephone to a mediation system. In response to the mediation system performing an operation 104 for receiving the mediated response command, an operation 106 for activating a mediated response mode is performed by the mediation system. In at least one embodiment of the operation 102 for transmitting a mediated response command, the operation 102 includes pressing a key on a keypad of the wireless telephone (such as an appropriate function key). In this manner, the wireless phone transmits for reception by the mediation system a corresponding signal.

An operation 107 for implementing the mediated response mode includes the operations 102 to 106. Once the operation 107 is performed, all communication requests transmitted for reception by the wireless telephone are received by the mediation system. In this manner, delayed initiation of the active voice communication session is accomplished via the mediation system for allowing the call recipient to move to a different location or to wait for a present situation to change prior to initiation of the active voice communication session.

In at least one embodiment of the operation 107 for implementing the mediated response mode, the operation 107 includes prompting the call recipient to select a desired (i.e. user-selected) announcement from a group of user-selectable announcements. For example, a plurality of system-provided announcements each have an associated title. After the operation 104 for receiving the mediated response command is performed, a list of announcement titles is displayed on a visual display of the wireless telephone. The call recipient selects a key associated with a desired one of the announcement titles. In this manner, the announcement corresponding to the desired announcement title is transmitted for reception by the calling party communication device for any communication requests received while the mediated response mode is activated.

Accordingly, in response to an operation 108 being performed by the calling party communication device for transmitting a communication request for reception by wireless telephone, an operation 110 is performed by the mediation system for receiving the communication request. After the operation 110 for receiving the communication request is performed, an operation 112 for transmitting a communication delay announcement for reception by the calling party communication device, an operation 114 for transmitting a communication request notification for reception by the wireless telephone and an operation 116 for delaying initiation of the active voice communication session are performed by the mediation system.

The operation 112 for transmitting the communication delay announcement for reception by the calling party communication device is performed for notifying the calling party that there will be a delay prior to initiation of the active voice communication session. The operation 114 for transmitting the communication request notification is performed for notifying the call recipient that a communication request transmitted for reception by the wireless telephone has been received by the mediation system. One embodiment of the communication request notification is a signal for activating a ringer and/or vibration device of the wireless telephone. In at least one embodiment of the operation 116 for delaying initiation of the active communication session, the operation 116 includes inhibiting the communication request from being forwarded to the wireless telephone from the mediation system until a command for initiating the active voice communication session is received by the mediation system from the wireless telephone.

After performing the operation 112 for transmitting the communication delay announcement, an operation 118 is performed by the calling party communication device for receiving the communication delay announcement. After performing the operation 114 for transmitting the communication request notification, an operation 120 is performed by the wireless telephone for receiving the communication request notification. After a delay period, such as the period of time required for the call recipient to move to a different location or for a present situation to change, an operation 122 is performed by the wireless telephone for transmitting a command for initiating the active communication voice session. The period of time required for the call recipient to move to a different location or for a present situation to change is referred to herein as a situation-specific delay period. The command for initiating the active voice communication session is transmitted for reception by the mediation system. In at least one embodiment of the operation 122 for transmitting the command for initiating the active voice communication session, the operation 122 includes pressing a key on a keypad of the wireless telephone, such as an appropriate function key. In this manner, the wireless phone transmits a corresponding signal for reception by the mediation system.

In response to the mediation system performing an operation 124 for receiving the command for initiation the active voice communication session, an operation 126 is performed by the mediation system for forwarding the communication request to the wireless telephone. In response to the wireless telephone performing an operation 128 for receiving the communication request, an operation 130 is performed by the wireless telephone for facilitating the interactive voice communication session. An example of facilitating the interactive voice communication session is enabling voice signals to be received by and transmitted from the wireless telephone.

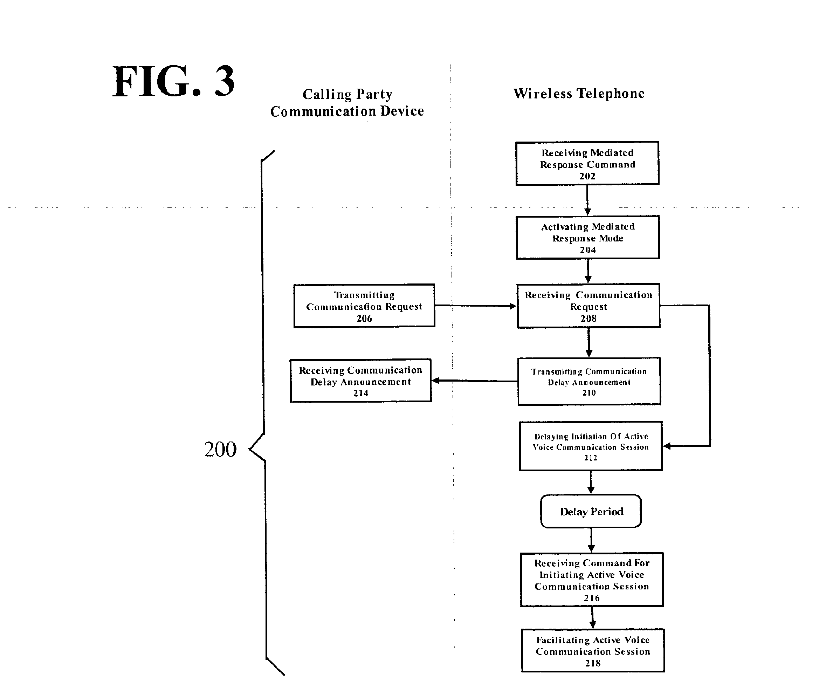

FIG. 3 depicts a detailed device-based embodiment of a method 200 for facilitating, via an automated implementation, delayed initiation of an active voice communication session. The method 200 includes an operation 202 for receiving a mediated response command. In at least one embodiment of the operation 202 for receiving the mediated response command, the operation 202 includes receiving a signal in response to a key on a keypad of the wireless telephone, such as an appropriate function key, being selected. In response to the wireless telephone performing the operation 202 for receiving the mediated response command, an operation 204 for activating a mediated response mode is performed by the wireless telephone.

The operations 202 to 204 jointly define an operation for implementing the mediated response mode. Once implemented, all communication requests received by the wireless telephone are subject to delayed initiation of an active voice communication session. In this manner, delayed initiation of the active voice communication session is accomplished via the wireless telephone for allowing the call recipient to move to a different location or to wait for a present situation to change prior to initiation of the active voice communication session.

Accordingly, in response to an operation 206 being performed by the calling party communication device for transmitting a communication request for reception by wireless telephone, an operation 208 is performed by the wireless telephone for receiving the communication request.
In at least one embodiment of the operation 208 for receiving the communication request, the operation 208 includes a receiving a signal, such as that associated with a key of the keypad being selected, for accepting the communication request. For example, a talk button on the keypad of the wireless telephone is pressed for accepting an incoming call.

After the operation 208 for receiving the communication request is performed, an operation 210 for transmitting a communication delay announcement for reception by the calling party communication device and an operation 212 for delaying initiation of the active voice communication session are performed by the wireless telephone. In at least one embodiment of the operation 212 for delaying initiation of the active communication session, the operation 212 includes selectively disabling the operation of a microphone of the wireless telephone until a command for initiating the active voice communication session is received by the wireless telephone. After performing the operation 210 for transmitting the communication delay announcement, an operation 214 is performed by the calling party communication device for receiving the communication delay announcement.

In one embodiment of the operation 210 for transmitting a communication delay announcement, the operation 210 includes prompting the call recipient to select a desired announcement from a group of user-selectable announcements and enabling the wireless telephone to retrieve the desired announcement from a group of user-selectable announcements for transmitting to the calling party communication device. For example, the user has previously stored a plurality of announcements in the device memory wherein each announcement has an associated title. In response to the communication request being received by the wireless telephone, a list of announcement titles is displayed on a visual display of the wireless telephone and the call recipient selects a key associated with a desired one of the announcement titles. In this manner, the announcement corresponding to the desired announcement title is transmitted for reception by the calling party communication device. In another embodiment of the operation 210 for transmitting a communication delay announcement, the operation 210 includes transmitting a universal announcement that is transmitted for all communication requests while the mediated response mode is activated.

After a delay period, such as the period of time required for the call recipient to move to a different location or for a present situation to change, an operation 216 is performed by the wireless telephone for receiving a command for initiating the active communication voice session. In at least one embodiment of the operation 216 for receiving the command for initiating the active voice communication session, the operation 216 includes receiving a signal in response to a key on a keypad of the wireless telephone, such as an appropriate function key, being selected. In response to the wireless telephone performing the operation 216 for receiving the command for initiation the active voice communication session, an operation 218 is performed by the wireless telephone for facilitating the interactive voice communication session.

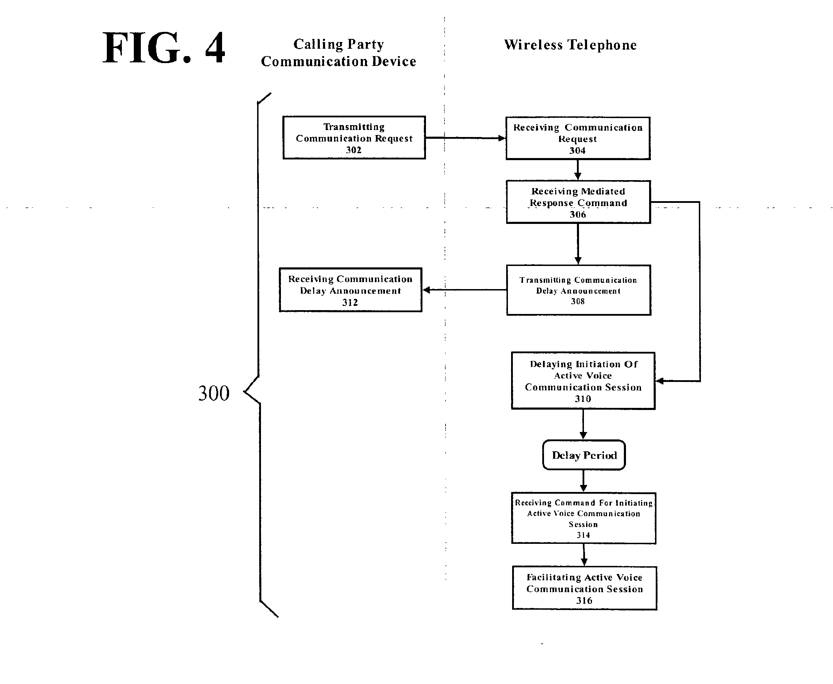

FIG. 4 depicts a detailed device-based embodiment of a method 300 for facilitating, via a manual implementation, delayed initiation of an active voice communication session. The method 300 includes an operation 302 being performed by the calling party communication device for transmitting a communication request for reception by wireless telephone. In response to an operation 304 being performed by the wireless telephone for receiving the communication request, an operation 306 for receiving a mediated response command is performed by the wireless telephone. In at least one embodiment of the operation 306 for receiving the mediated response command, the operation 306 includes receiving a signal in response to a key on a keypad of the wireless telephone, such as an appropriate function key, being selected.

After the wireless telephone performs the operation 306 for receiving the mediated response command, an operation 308 for transmitting a communication delay announcement for reception by the calling party communication device and an operation 310 for delaying initiation of the active voice communication session are performed by the wireless telephone. In at least one embodiment of the operation 310 for delaying initiation of the active communication session, the operation 310 includes selectively disabling the operation of a microphone of the wireless telephone until a command for initiating the active voice communication session is received by the wireless telephone. After performing the operation 308 for transmitting the communication delay announcement, an operation 312 is performed by the calling party communication device for receiving the communication delay announcement.

After a delay period, such as the period of time required for the call recipient to move to a different location or for a present situation to change, an operation 314 is performed by the wireless telephone for receiving a command for initiating the active communication voice session. In at least one embodiment of the operation 314 for receiving the command for initiating the active voice communication session, the operation 314 includes receiving a signal in response to a key on a keypad of the wireless telephone, such as an appropriate function key, being selected. In response to the wireless telephone performing the operation 314 for receiving the command for initiation the active voice communication session, an operation 316 is performed by the wireless telephone for facilitating the interactive voice communication session.

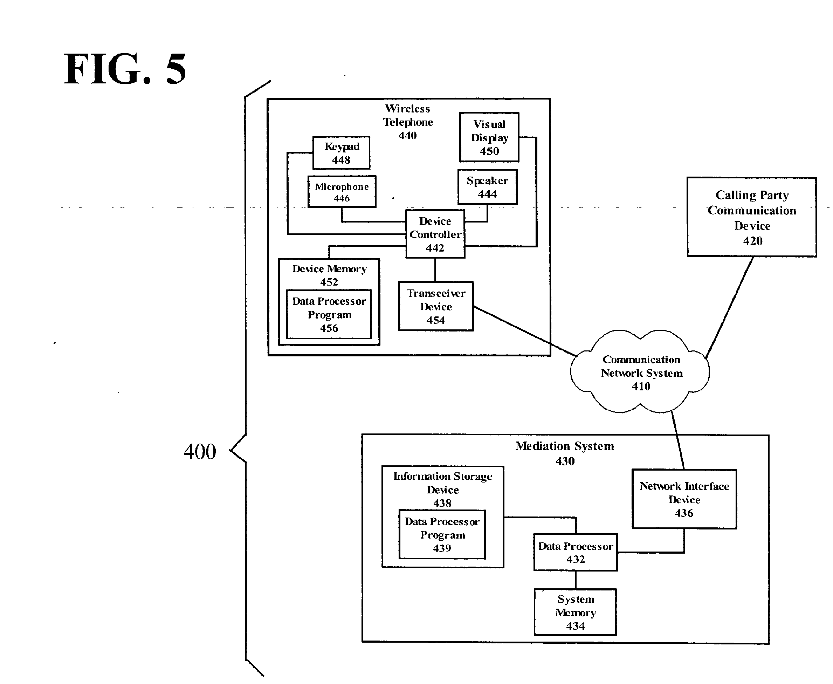

FIG. 5 depicts an embodiment of an apparatus 400 suitably configured for carrying out embodiments of the methods, such as those disclosed herein, for facilitating delayed initiation of an active voice communication session. The apparatus 400 includes a communication network system 410, a calling party communication device 420, a mediation system 430, and a wireless telephone 440. The calling party communication device 420, the mediation system 430 and the wireless telephone 440 are connected to the communication network system 410 for enabling communication therebetween.

In at least one embodiment of the communication network system 410, the communication network system 410 includes a plurality of different types of communication networks. Examples of the plurality of different types of networks include, but are not limited to, wireless telephone networks, public switched telephone networks, data packet networks, computer networks and the like. The various networks of the communication network system 410 are connected for enabling communication therebetween. In this manner, communication may be facilitated between the wireless telephone, the calling party communication device and the mediation system.

Examples of the calling party communication device 420 include a wired telephone, a wireless telephone and a computer capable of transmitting and receiving a voice signal. In at least one embodiment of the calling party communication device 420, the calling party communication device 420 is a wired telephone connected to a public switched telephone network (PSTN).

The mediation system 430 includes a data processor 432 having system memory 434, a network interface device 436 and an information storage device 438 connected thereto. One embodiment of the data processor 432 is a microprocessor, such as that of a workstation, a network server, or a mainframe computer system. The communication network system 410 is connected to the network interface device 436 for enabling communication between the mediation system 430 and the communication network system 410. Examples of the network interface device 436 include a network interface card (NIC), an Ethernet card, a modem, and the like. Examples of the information storage device 438 include an optical storage drive, a magnetic hard drive and the like.

The mediation system 430 includes a first data processor program 439 accessible by the data processor 432. The first data processor program 439 controls at least a portion of the operations, and/or portions thereof, associated with the data processor 432. As depicted in FIG. 5, the first data processor program 439 is resident on the information storage device 438, thus being accessible by the data processor 432. It is also contemplated herein that the first data processor program 439 is accessible by the information storage device 438 or by the data processor 432 from a program storage apparatus such as a diskette, a compact disk, optical diskette or the like. For example, the data processor program may be on a compact disk and be accessible by the data processor via a compact disk drive unit.

A data processor program is defined herein to include computer software, data processor algorithms or any other type of instruction code capable of controlling operations associated with a data processor. A data processor program product is defined herein as a data processor program accessible from a program storage apparatus, such as a diskette a compact disk, hard disk drive or the like. It should be understood that, in some instances, the data processor program facilitates a particular operation or method via another component of a system or device rather than the data processor performing the operation or method itself.

The wireless telephone 440 includes a device controller 442 having a speaker 444, a microphone 446, a keypad 448, a visual display 450, device memory 452 and a transceiver device 454 connected thereto. The device controller 442 is an example of a data processor capable of controlling and integrating the operation of speaker 444, the microphone 446, the keypad 448, the memory 450 and the transceiver device 454. The transceiver device 454 is capable of enabling the communication of information, such as voice signals and data, between the wireless telephone 440 and the communication network 410. In this manner, the wireless telephone 440 is capable of transmitting information to and receiving information from the calling party communication device 420 and the mediation system 430.

In at least one embodiment of the wireless telephone 440, the wireless telephone 440 includes a second data processor program 456 accessible by the device controller 432 via the device memory 452. The second data processor program 456 controls at least a portion of the operations, and/or portions thereof, associated with the device controller 442. As depicted in FIG. 5, the second data processor program 456 is resident on the device memory storage device 438, thus being accessible by the device controller 442. It is also contemplated herein that the second data processor program 456 is accessible from a program storage apparatus such as a diskette, a compact disk, optical diskette or the like for being transferred into the device memory 452. For example, the data processor program may be on a hard drive or optical drive for being copied into the device memory 452 during manufacture of the wireless telephone 440.

### Example 1 - Automated Implementation via a System-Based Solution

Craig is expecting an important call on his wireless telephone while he is in a meeting. Not wanting to disrupt the meeting when the call arrives, he selects an appropriate function key for activating a vibration mode rather than a ring mode and selects an appropriate function key of the keypad of his telephone for activating a mediated response mode for his wireless telephone. In response to activating the mediated response mode, Craig is prompted via a message on a visual display of the wireless telephone to select a desired announcement that will be transmitted to the communication device of the calling party while the mediated response mod is activated. Craig does so by selecting an appropriate key of the keypad. Craig's wireless telephone is now in the mediated response mode.

During the meeting, Craig receives the call that he is expecting and his telephone vibrates (communication request notification) to notify him that he has in incoming call (communication reguest). In response to incoming call being received by Craig's wireless telephone, the announcement that he selected while activating the mediated response mode is transmitted for reception by the communication device of the calling party for notifying the calling party that Craig will be taking the call momentarily.

Craig excuses himself from the meeting and moves to a more appropriate location for taking the call. After moving locations, Craig selects an appropriate key of the keypad, such as a function key, for indicating that he would now like to take the incoming call (i.e. initiate an active voice communication session with the calling party). Accordingly, Craig then begins communicating with the calling party.

### Example 2 - Manually Implementation Method via a Device-Based Solution

Craig is on crowded elevator when he receives a call that he doesn't want to miss. However, it is a call that he does not want to take while in the elevator with any other passengers. Craig's phone is not in the mediated response mode, so uses the keypad of his telephone to manually implements a mediated response mode for delaying initiation of an active voice communication session. Craig selects an appropriate function key of the keypad of his telephone for implementing the mediated response mode.

After selecting the appropriate function key for implementing the mediated response mode, Craig's wireless telephone automatically answers the call, mutes the microphone of his wireless telephone and transmits a system-provided announcement from reception by the communication device of the calling party. The announcement conveys a message for notifying the calling party that Craig will be taking the call momentarily.

Once off the elevator, Craig selects an appropriate key of the keypad, such as a function key, for indicating that he would now like to take the incoming call (i.e. initiate an active voice communication session with the calling party).
Accordingly, Craig then begins communicating with the calling party.

In the preceding detailed description, reference has been made to the accompanying drawings that form a part hereof, and in which are shown by way of illustration specific embodiments in which the invention may be practiced. These embodiments, and certain variants thereof, have been described in sufficient detail to enable those skilled in the art to practice the invention. It is to be understood that other suitable embodiments may be utilized and that logical, mechanical, chemical and electrical changes may be made without departing from the spirit or scope of the invention. For example, functional blocks shown in the figures could be further combined or divided in any manner without departing from the spirit or scope of the invention. To avoid unnecessary detail, the description omits certain information known to those skilled in the art.
The preceding detailed description is, therefore, not intended to be limited to the specific forms set forth herein, but on the contrary, it is intended to cover such alternatives, modifications, and equivalents, as can be reasonably included within the spirit and scope of the appended claims.

## Claims

1. A method capable of facilitating a mediated response to a communication request, comprising:
receiving a communication request, wherein the communication request is intended for reception by a wireless telephone and is received from a calling party communication device;
delaying initiation of an active voice communication session between the wireless telephone and the calling party communication device after receiving the communication request; and
transmitting an announcement for being received by the calling party communication device after receiving the communication request, wherein the announcement includes information for conveying that initiation of the active voice communication session has been delayed.

2. The method of claim 1, further comprising:
receiving a mediated response command prior to receiving communication request; and
activating a mediated response mode in response to
receiving the mediated response command.

3. The method of claim 2 wherein receiving the mediated response command includes receiving a signal from a keypad of the wireless telephone.

4. The method of claim 1 wherein delaying initiation of an active voice communication session includes inhibiting transmission of a voice signal from the wireless telephone for reception by the calling party communication device.

5. The method of claim 4 wherein inhibiting transmission of a voice signal includes selectively activating a mute mode of the wireless telephone for selectively disabling the operation of a microphone of the wireless telephone.

6. The method of claim 1, further comprising:
receiving a command for initiating the active voice
communication session request after transmitting the announcement; and
initiating the active voice communication session in response to receiving the command for initiating the active voice communication session.

7. The method of claim 6 wherein receiving the command for initiating the active voice communication session includes receiving a signal from a keypad of the wireless telephone.

8. The method of claim 6 wherein receiving the command for initiating the active voice session includes receiving the command after a situation-specific delay period.

9. The method of claim 1, further comprising:
receiving a mediated response command after the
receiving communication request, wherein:
initiation of the active voice communication session is delayed in response to receiving the mediated response command; and
the announcement is transmitted in response to receiving the mediated response command.

10. The method of claim 9 wherein receiving the mediated response command includes receiving a signal from a keypad of the wireless telephone.

11. The method of claim 9, further comprising:
initiating the active voice communication session in
response to receiving a command for initiating the active voice communication session.

12. The method of claim 11 wherein receiving the command for initiating the active voice communication session includes receiving a signal from a keypad of the wireless telephone.

13. The method of claim 11 wherein receiving the command for initiating the active voice session includes receiving the command after a situation-specific delay period.

14. The method of claim 1, further comprising:
transmitting a communication notification request from
a mediation system to the wireless telephone in response to receiving the communication request,
wherein the communication request is received by the mediation system; and
receiving, by the mediation system from the wireless telephone, a command for initiating the active voice communication session request after transmitting the announcement.

15. The method of claim 14, further comprising:
initiating the active voice communication session in
response to receiving the command for initiating the active voice communication session.

16. The method of claim 15 wherein initiating the active voice communication request includes forwarding the communication request from the mediation system to the wireless telephone.

17. The method of claim 14 wherein receiving the command for initiating the active voice communication session includes receiving a signal from a keypad of the wireless telephone.

18. The method of claim 14 wherein receiving the command for initiating the active voice session includes receiving the command after a situation-specific delay period.

19. The method of claim 14 wherein initiating the active voice session includes enabling transmission of a voice signal from the wireless telephone to the calling party communication device.

20. The method of claim 19 wherein enabling transmission of the voice signal from the wireless telephone to the calling party communication device includes de-activating a mute mode of the wireless telephone for enabling the operation of a microphone of the wireless telephone.

21. The method of claim 1 wherein transmitting the announcement includes retrieving a user-selected announcement from a group of user-selectable announcements.

22. A data processor program product, comprising:
a data processor program processable by a data processor;
an apparatus from which the data processor program is accessible by the data processor; and
the data processor program being capable of enabling the data processor to facilitate:
receiving a communication request,
wherein the communication request is intended for reception by a wireless telephone and is received from a calling party communication device;
delaying initiation of an active voice communication session between the wireless telephone and the calling party communication device after receiving the communication request; and
transmitting an announcement for being received by the calling party communication device after receiving the communication request, wherein the announcement includes information for conveying that initiation of the active voice communication session has been delayed.

23. The data processor program product of claim 22 wherein the computer program is further capable of enabling the data processor to facilitate:
receiving a mediated response command prior to receiving communication request; and
activating a mediated response mode in response to
receiving the mediated response command.

24. The data processor program product of claim 23 wherein enabling the data processor to facilitate receiving the mediated response command includes enabling the data processor to facilitate receiving a signal from a keypad of the wireless telephone.

25. The data processor program product of claim 22 wherein enabling the data processor to facilitate delaying initiation of an active voice communication session includes enabling the data processor to facilitate inhibiting transmission of a voice signal from the wireless telephone for reception by the calling party communication device.

26. The data processor program product of claim 25 wherein enabling the data processor to facilitate inhibiting transmission of a voice signal includes enabling the data processor to facilitate selectively activating a mute mode of the wireless telephone for selectively disabling the operation of a microphone of the wireless telephone.

27. The data processor program product of claim 22 wherein the computer program is further capable of enabling the data processor to facilitate:
receiving a command for initiating the active voice
communication session request after transmitting the announcement; and
initiating the active voice communication session in response to receiving the command for initiating the active voice communication session.

28. The data processor program product of claim 27 wherein enabling the data processor to facilitate receiving the command for initiating the active voice communication session includes enabling the data processor to facilitate receiving a signal from a keypad of the wireless telephone.

29. The data processor program product of claim 27 wherein enabling the data processor to facilitate receiving the command for initiating the active voice session includes enabling the data processor to facilitate receiving the command after a situation-specific delay period.

30. The data processor program product of claim 22 wherein the computer program is further capable of enabling the data processor to facilitate:
receiving a mediated response command after the
receiving communication request, wherein:
initiation of the active voice communication session is delayed in response to receiving the mediated response command; and
the announcement is transmitted in response to receiving the mediated response command.

31. The data processor program product of claim 30 wherein enabling the data processor to facilitate receiving the mediated response command includes enabling the data processor to facilitate receiving a signal from a keypad of the wireless telephone.

32. The data processor program product of claim 30 wherein the computer program is further capable of enabling the data processor to facilitate:
initiating the active voice communication session in
response to receiving a command for initiating the active voice communication session.

33. The data processor program product of claim 32 wherein enabling the data processor to facilitate receiving the command for initiating the active voice communication session includes enabling the data processor to facilitate receiving a signal from a keypad of the wireless telephone.

34. The data processor program product of claim 32 wherein enabling the data processor to facilitate receiving the command for initiating the active voice session includes enabling the data processor to facilitate receiving the command after a situation-specific delay period.

35. The data processor program product of claim 22 wherein the computer program is further capable of enabling the data processor to facilitate:
transmitting a communication notification request from
a mediation system to the wireless telephone in response to receiving the communication request,
wherein the communication request is received by the mediation system; and
receiving, by the mediation system from the wireless telephone, a command for initiating the active voice communication session request after transmitting the announcement.

36. The data processor program product of claim 35 wherein enabling the data processor to facilitate receiving the command for initiating the active voice communication session includes enabling the data processor to facilitate receiving a signal from a keypad of the wireless telephone.

37. The data processor program product of claim 35 wherein enabling the data processor to facilitate receiving the command for initiating the active voice session includes enabling the data processor to facilitate receiving the command after a situation-specific delay period.

38. The data processor program product of claim 35 wherein the computer program is further capable of enabling the data processor to facilitate:
initiating the active voice communication session in
response to receiving the command for initiating the active voice communication session.

39. The data processor program product of claim 38 wherein enabling the data processor to facilitate initiating the active voice communication request includes enabling the data processor to facilitate forwarding the communication request from the mediation system to the wireless telephone.

40. The data processor program product of claim 38 wherein enabling the data processor to facilitate initiating the active voice session includes enabling the data processor to facilitate transmission of a voice signal from the wireless telephone to the calling party communication device.

41. The data processor program product of claim 40 wherein enabling the data processor to facilitate transmission of the voice signal from the wireless telephone to the calling party communication device includes enabling the data processor to facilitate de-activating a mute mode of the wireless telephone for enabling the operation of a microphone of the wireless telephone.

42. The data processor program product of claim 22 wherein enabling the data processor to facilitate transmitting the announcement includes enabling the data processor to facilitate retrieving a user-selected announcement from a group of user-selectable announcements.

43. An apparatus capable of facilitating a mediated response to a communication request, the apparatus comprising:
a data processor;
memory connected to the data processor and
a signal communicating device connected to the data processor; and
a data processor program;
wherein the data processor program is capable of enabling the data processor to facilitate:
receiving a communication request via the
signal communicating device, wherein the communication request is intended for reception by a wireless telephone and is received from a calling party communication device;
delaying initiation of an active voice communication session between the wireless telephone and the calling party communication device after receiving the communication request; and
transmitting, via the signal communication device, an announcement for being received by the calling party communication device after receiving the communication request, wherein the announcement includes information for conveying that initiation of the active voice communication session has been delayed.

44. The apparatus of claim 43 wherein:
the data processor includes a device controller of a wireless telephone; and
the signal communicating device includes a signal
transceiver device of the wireless telephone.

45. The apparatus of claim 44, wherein:
the wireless telephone further includes a keypad; and
the data processor program is further capable to enabling the data processor to facilitate:
receiving a mediated response command signal from the keypad of the wireless telephone prior to receiving communication request; and
activating a mediated response mode in response to receiving the mediated response command signal from the keypad.

46. The apparatus of claim 44, wherein:
the wireless telephone further includes a microphone;
and
the data processor program being capable of enabling
the data processor to facilitate delaying initiation of an active voice communication session includes the data processor being capable of facilitating selectively activating a mute mode of the wireless telephone for selectively disabling the operation of the microphone.

47. The apparatus of claim 44, wherein:
the wireless telephone further includes a keypad; and
the data processor program being further capable of
enabling the data processor to facilitate:
receiving a command signal from the keypad
for initiating the active voice communication session request after transmitting the announcement; and
initiating the active voice communication session in response to receiving the command signal for initiating the active voice communication session.

48. The apparatus of claim 44, wherein:
the wireless telephone further includes a keypad; and
the data processor program is further capable of enabling the data processor to facilitate receiving a mediated response command signal from the keypad after the receiving communication request, wherein:
initiation of the active voice communication
session is delayed in response to receiving the mediated response command signal; and
the announcement is transmitted in response to receiving the mediated response command signal.

49. The apparatus of claim 48 wherein the data processor program is further capable of enabling the data processor to facilitate initiating the active voice communication session in response to receiving a command signal from the keypad for initiating the active voice communication session.

50. The apparatus of claim 49 wherein:
the wireless telephone further includes a microphone;
and
the data processor program being capable of
facilitating initiating the active voice session includes the data processor being capable of facilitating de-activating a mute mode of the wireless telephone for enabling the operation of the microphone.

51. The apparatus of claim 43 wherein:
the data processor includes a microprocessor of a mediation system;
the signal communicating device includes a network
interface device of the mediation; and
the data processor program is further capable of
enabling the data processor to facilitate:
transmitting a communication notification
request from the mediation system to the wireless telephone in response to the mediation system receiving communication request; and
receiving, by the mediation system from the wireless telephone, a command for initiating the active voice communication session request after transmitting the announcement.

52. The apparatus of claim 51 wherein the data processor program is further capable of enabling the data processor to facilitate:
forwarding the communication request to the wireless
telephone in response to receiving the command for initiating the active voice communication session.
